(19) **Europäisches Patentamt**

**European Patent Office**

**Office européen des brevets**

(11) Veröffentlichungsnummer : **0 064 209
B1**

(12) **EUROPÄISCHE PATENTSCHRIFT**

(45) Veröffentlichungstag der Patentschrift :
04.07.84

(21) Anmeldenummer : **82103262.0**

(22) Anmeldetag : **19.04.82**

(51) Int. Cl.³ : **B 29 D 27/02**

(54) **Vorrichtung zum Herstellen eines reaktionsfähigen, Massivstoff oder Schaumstoff bildenden Reaktionsgemisches aus zwei fileßfähigen Reaktionskomponenten.**

(30) Priorität : **02.05.81 DE 3117376**

(43) Veröffentlichungstag der Anmeldung :
**10.11.82 Patentblatt 82/45**

(45) Bekanntmachung des Hinweises auf die Patenterteilung : **04.07.84 Patentblatt 84/27**

(84) Benannte Vertragsstaaten :
**DE FR GB IT**

(56) Entgegenhaltungen :
**AT-B-   309 056
AT-B-   325 297
DE-A- 3 018 381
DE-B- 2 364 501**

(73) Patentinhaber : **BAYER AG
Konzernverwaltung RP Patentabteilung
D-5090 Leverkusen 1 Bayerwerk (DE)**

**Maschinenfabrik Hennecke GmbH**

**D-5090 Leverkusen (DE)**

(72) Erfinder : **Müller, Heinz  ·
Buchenweg 16
D-5090 Leverkusen 1 (DE)**
Erfinder : **Raffel, Reiner, Dipl.-Ing.
Müschbungert 2
D-5200 Siegburg (DE)**
Erfinder : **Althausen, Ferdinand
Niederwennerscheid 48
D-5206 Neunkirchen-Seelscheid (DE)**

## Beschreibung

Die Erfindung betrifft eine Vorrichtung zum Herstellen eines reaktionsfähigen, Massiv- oder Schaumstoff bildenden Reaktionsgemisches aus zwei fließfähigen Reaktionskomponenten ; bestehend aus :

a) Vorratsbehältern, von denen über

b) Dosierpumpen zu einem

c) Mischkopf führende

d) Zuleitungen in

e) Einspritzdüsen enden, von denen

f) Rücklaufleitungen abführen, wobei die Einspritzdüsen in die mit einer Auslaßöffnung versehene

g) Mischkammer des Mischkopfes weisen, und wobei

h) die Einspritzdüsen jeweils aufweisen :

h) a) ein Gehäuse,

h) b) eine im Gehäuse angeordnete, mit der Zuleitung und Rücklaufleitung verbundene Bohrung,

h) c) eine in der Bohrung geführte Düsennadel, welche mit

h) c) a) einer Ausnehmung zum Verbinden von Zuleitung und Rückleitung während der Rücklaufphase,

h) c) b) einer Dichtfläche und mit

h) c) c) einem Nadelzapfen versehen ist,

h) d) einen im Gehäuse angeordneten, mit der Dichtfläche der Düsennadel korrespondierenden Dichtsitz, der

h) d) a) mittig mit einem zylindrischen Düsenloch versehen ist, wobei der

h) e) Nadelzapfen in das Düsenloch einführbar ist. Eine derartige Vorrichtung ist bekannt (DE-B-2 364 501).

Diese Mischvorrichtungen arbeiten im Durchlauf und finden zunehmend auch Anwendung für die Herstellung kleinvolumiger Formteile. Da man zur Herstellung der benötigten relativ kleinen Gemischmengen die Durchlaufzeit, d. h. die Zeit zur Herstellung einer bestimmten Gemischmenge, wegen der erforderlichen Vermischung nicht beliebig klein machen kann, hat man versucht, die Düsenlöcher möglichst klein zu gestalten. Ihrem Durchmesser entsprechend mußten die Zapfen der Nadeldüsen mit ihrem Durchmesser ebenfalls angepaßt werden. Mit kleiner werdenden Zapfendurchmessern vergrößern die Schwierigkeiten in der Fertigung, weil Probleme bei der Härtung am Übergang vom Zapfen zum Düsenschaft wegen der unterschiedlichen Durchmesser auftreten. Selbst wenn verzugfreie Düsennadeln mit Zapfen erhalten werden, besteht die Gefahr, daß bereits bei geringsten Fremdkörpern im oder am Düsenloch der Zapfen bleibend verbogen wird oder abbricht. Die Gefahr der Schädigung ist umso größer, je geringer der Zapfendurchmesser ist. Es war zwar möglich, Düsennadeln mit einem Zapfen bis herab zu 0,8 mm Durchmesser herzustellen und zu verwenden ; jedoch waren die vorgenannten Herstellungsschwierigkeiten so schwerwiegend und die Zapfenbrüche in der Praxis so häufig, daß der bei der Herstellung der Düsennadeln anfallende Ausschuß und die beim Betrieb der Vorrichtung auftretenden Störungen durch Zapfenbrüche und Zerstörung der Düsenlöcher nicht tragbar sind.

Es liegt die Aufgabe vor, für die vorgenannte Art von Vorrichtungen die Einspritzdüsen konstruktiv so zu verbessern, daß die Düsennadeln ausschußfrei herstellbar sind und daß ihre Zapfen auch bei sehr geringen Durchmessern eine hohe Bruchsicherheit aufweisen.

Diese Aufgabe wird dadurch gelöst, daß

i) Düsennadel und Nadelzapfen aus zwei einzelnen Teilen bestehen, wobei der Nadelzapfen

i) a) in der Düsennadel austauschbar gelagert ist,

i) b) aus einem zähen, hochelastischen Stahl besteht und

i) c) im vorderen Bereich der Düsennadel von einer in der Düsennadel angeordneten Ausnehmung umgeben ist.

Die Teilung von Düsennadel und Düsenzapfen ermöglicht es, für die einzelnen Teile unterschiedliche Werkstoffe zu verwenden, so daß die beiden Teile, soweit überhaupt noch erforderlich, getrennt gehärtet werden können. Bricht wirklich einmal ein Zapfen ab, was sich wohl nie ganz vermeiden lassen wird, so ist er leicht austauschbar.

Als Werkstoff für die Düsennadeln lassen sich die bisher hierfür gebräuchlichen Werkstoffe verwenden. Als Werkstoff für den Nadelzapfen eignet sich Werkzeugstähle für Kaltarbeit oder Schnellarbeitsstähle. Hierzu sei beispielsweise verwiesen auf « Stahlschlüssel », 1977, Verlag Stahlschlüssel Wegst KG, D-7142 Marbach. Beispielsweise ist der unter der deutschen Stoffnummer 1.2516 (DIN-Bezeichnung 120 WV 4) aufgeführte Werkzeugstahl für Kaltarbeit geeignet oder beispielsweise auch der unter der deutschen Stoffnummer 1.3343 (DIN-Bezeichnung S 6-5-2 (DMo 5)) entsprechend der US-Stoffnummer 46 (US-Standard AISE M2) angegebene Schnellarbeitsstahl.

Die vorzugsweise konzentrisch angeordnete Ausnehmung hat den Vorteil, daß sich geringe Exzentrizitäten zwischen Düsenloch und Nadelzapfen ausgleichen können, weil sie bei entsprechender Tiefe der Nut dem Nadelzapfen aufgrund seiner freien Länge eine elastische Verbiegung ohne Bruch erlaubt, soweit dies gewisse Grenzen nicht überschreitet.

Vorzugsweise ist die Ausnehmung als Ringnut ausgebildet. Das heißt, sie hat hohlzylindrische Form.

Nach einer anderen Ausführungsform erweitert sich die Ausnehmung zur Dichtfläche hin. Diese Ausführungsform hat gegenüber der zylindrischen Ringnut den Vorteil, daß der Nadelzapfen sich bei Querbeanspruchung bzw. beim Verbiegen an die sich trichterförmig erweiternde Wandung der Ausnehmung tangential anlegen kann.

Vorzugsweise weist die Ausnehmung eine Füllung aus elastischem Werkstoff auf.

Dadurch wird erreicht, daß in der Ausnehmung sich keine Anbackungen festsetzen können, die die Biegefähigkeit des Nadelzapfens beeinträchtigen würden. Der elastomere Werkstoff hat also lediglich die Aufgabe, die Ausnehmung auszufüllen. Er muß aber dabei so elastisch sein, daß er der Biegefähigkeit des Nadelzapfens keinen zu großen Widerstand entgegensetzt. Hierfür eignet sich beispielsweise ein Silikonkautschuk geeigneter Elastizität.

Die Länge des aus der Düsennadel herausragenden Endes des Nadelzapfens ist vorzugsweise einstellbar. Durch Diese Möglichkeit läßt sich beim Öffnen und Schließen der Düsen die Überdeckung von Kreislauf- und Injektionsstellung einstellen.

Nach einer weiteren besonderen Ausführungsform weist der Nadelzapfen rückseitig einen Kopf auf.

In diesem Falle ist die eigentliche Düsennadel als Hülse ausgebildet, durch deren Bohrung der Nadelzapfen hindurchgeschoben ist, so daß er mit dem Kopf anschlägt. Durch eine gegen den Kopf andrehbare Mutter läßt sich der Nadelzapfen fixieren. Legt man bei dieser Ausführungsform den Nadelzapfen auf seine größtmögliche herausstehende Länge aus, so kann man kürzere freie Längen des Nadelzapfens dadurch einstellen, daß man auf den Nadelzapfen zunächst ein oder mehrere Unterlegscheiben entsprechender Dicke auffädelt und dann den Nadelzapfen in die als Hülse ausgebildete Düsennadel einschiebt, und, wie oben beschrieben, fixiert. Durch die Unterlegscheiben wird dann die herausstehende Länge des Nadelzapfens entsprechend reduziert.

Nach einer anderen Ausführungsform ist der Nadelzapfen durch eine Klemmverbindung in der Düsennadel gehalten.

Nach einer weiteren besonderen Ausführungsform steht die Füllung bei geöffnetem Düsenloch über die Dichtfläche der Düsennadel vor.

Bei Abstimmung der überstehenden Länge auf die Elastizität des Materials der Füllung sowie auf die Öffnungs- und Schließgeschwindigkeit der Düsennadel besteht mit dieser Maßnahme ein weiteres Mittel, um auf die Öffnungs- und Schließzeiten der Düse Einfluß zu nehmen.

In der Zeichnung ist die neue Vorrichtung rein schematisch mit verschiedenen Ausführungsformen der Düse dargestellt und nachstehend näher erläutert. Es zeigen :

Figur 1 die Vorrichtung im Schema,

Figur 2 eine erste Ausführungsform der Düse im geschlossenen Zustand im Längsschnitt,

Figur 3 die gleiche Düse im geöffneten Zustand im Längsschnitt,

Figur 4 eine zweite Ausführungsform der Düse in geschlossenem Zustand im Längsschnitt und

Figur 5 die gleiche Düse im geöffneten Zustand im Längsschnitt.

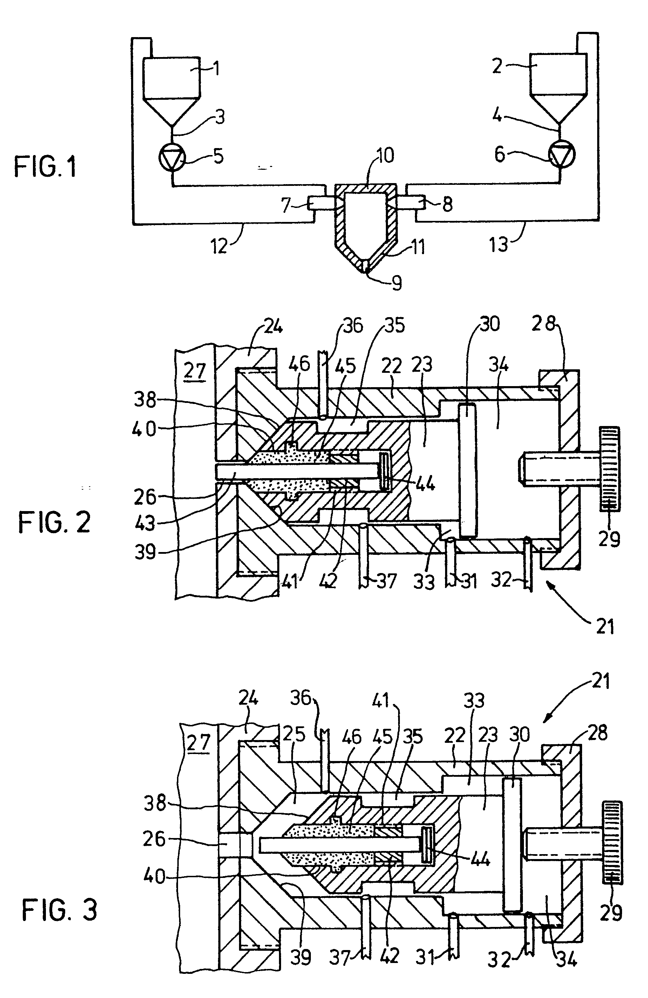

In Fig. 1 führen von Vorratsbehältern 1, 2 für Polyol bzw. Isocyanat Zuleitungen 3, 4 über Dosierpumpen 5, 6 zu Einpritzdüsen 7, 8, welche in die mit einer Auslaßöffnung 9 versehene Mischkammer 10 eines Mischkopfes 11 münden.

In Fig. 2, 3 besteht die Einspritzdüse 21 im wesentlichen aus einem Gehäuse 22 und einer darin geführten Düsennadel 23. Das Gehäuse 22 ist in das Mischkammergehäuse 24 (angedeutet) eingeschraubt. Es enthält eine Führungsbohrung 25 für die Düsennadel 23. Ein Düsenloch 26 weist in die Mischkammer 27. Rückseitig ist die Führungsbohrung 25 mittels einer Überwurfmutter 28 verschlossen. Eine Stellschraube 29 dient der Einstellung der Hubweite der Düsennadel 23. An ihrem hinteren Ende trägt die Düsennadel 23 einen doppelseitig beaufschlagbaren Hydraulikkolben 30, dem die mit Anschlüssen 31, 32 versehenen Hydraulikkammern 33 bzw. 34 zugeordnet sind. Die Düsennadel 23 ist mit einer konzentrischen Ringnut 35 versehen, welche während der Schließstellung der Düsennadel 23 die Zuleitung 36 mit der Rücklaufleitung 37 (Fig. 2) verbindet. Die vordere Stirnfläche der Düsennadel 23 ist als Dichtfläche 38 ausgebildet, die mit der im Gehäuse 22 angeordneten Dichtfläche 39 kooperiert. Die Dichtflächen 38,39 sind gehärtet. Am vorderen Ende ist die Düsennadel 23 mit einer zentrischen Ausnehmung 40 ausgestattet, die einen Gewindeabschnitt 41 aufweist. In den Gewindeabschnitt 41 ist eine Gewindeklemmhülse 42 eingeschraubt, die einen Nadelzapfen 43 von 0,8 mm Durchmesser festhält. Er ist aus einem hochelastischen Werkzeugstahl für Kaltarbeit nach DIN 120 WV4 (s. Stahlschlüssel, Verlag Stahlschlüssel Wegst KG, 1977, S. 175, Stoffnummer 1.2516) gefertigt. Dieser Stahl ist verschleißfest, aber gleichzeitig so biegeelastisch, daß Quer- bzw. Biegebeanspruchungen des Nadelzapfens 43 in einem für die Praxis ausreichenden Belastungsbereich nicht zu Bruch führen. Der vordere Teil des Nadelzapfens 43 ragt aus der Gewindeklemmhülse 42 heraus, durch die Ausnehmung 40 hindurch und darüber hinaus, so daß er in Schließstellung der Düsennadel 23 in das Düsenloch 26 eine vorgegebene Strecke abdichtend hineinreicht. Das Maß dieser Strecke ist durch das Einlegen einer oder mehrerer Distanzscheiben 44, auf der (denen) sich der Nadelzapfen 43 abstützt, exakt einstellbar. Diese Einstellbarkeit ist wichtig, um während der Umschaltbewegungen der Düsennadel 23 eine gewisse Überdeckung der Förderung der Komponente in die Mischkammer 27 und in die Rücklaufleitung 37 zu vermeiden bzw. erforderlichenfalls zu ermöglichen.

Die Ausnehmung 40, die eine Tiefe von etwa 15 mm bis zur Gewindehülse 42 besitzt, gewährt dem Nadelzapfen 43 eine ausreichend lange Biegestrecke bei Querbeanspruchung, so daß die Bruchgefahr auch insbesondere durch diese Maßnahme herabgesetzt wird. Ein Ansammeln und Aushärten von Material in der Ausnehmung, sei es durch von der Komponente mitgeführte Feststoffkörperchen oder durch unerwünschtes Eindringen von Reaktionsgemisch bei Störfällen, würde die oben beschriebene angestrebte Wirkung zunichte machen. Deshalb weist die Ausnehmung 40 eine Füllung 45 aus hochverschleißfestem Silikonkautschuk auf. Sie ist durch das Eingreifen in eine in der Ausnehmung 40 angeordnete Nut 46 gegen Herausrutschen gesichert. Im vorliegenden Falle steht die Füllung 45 bei offenem Düsenloch 26 geringfügig aber definiert über die Dichtfläche 38 der Düsennadel 23 vor. Beim Bewegen der Düsennadel 23 in die Schließstellung drückt sich die Füllung 45 beim Kontakt mit der Dichtfläche 39 zusammen, so daß die Förderung der Komponente in die Mischkammer 27 bereits etwas eher unterbrochen wird, bevor sich die Dichtflächen 38 und 39 berühren. Bei der Öffnungsbewegung der Düsennadel 23 wird das Düsenloch 26 infolge der elastischen Rückstellkraft der Füllung 45 etwas später freigegeben als die Dichtwirkung der Dichtflächen 38, 39 aufgehoben wird. Diese Maßnahme bedeutet bei der Wahl eines entsprechend abgestimmten Überstandes und Elastizität der Füllung 45 einen weiteren Parameter zur Einflußnahme auf die oben erwähnte Überdeckung. Da die Füllung 45 sich leicht austauschen läßt, kann man die Arbeitsweise der Einspritzdüse in besagter Hinsicht schnell speziellen Erfordernissen anpassen, indem man für den speziellen Zweck eine Füllung mit entsprechendem Überstand wählt. Die Beeinflussung der Überdeckung mittels einer überstehenden Füllung 45 ist insbesondere dann von Vorteil, wenn ansonsten in Schließstellung der Düsennadel 23 der Nadelzapfen 43 nicht weit genug in das Düsenloch 26 hineinragen würde, so daß ausreagierende Gemischreste darin verbleiben könnten.

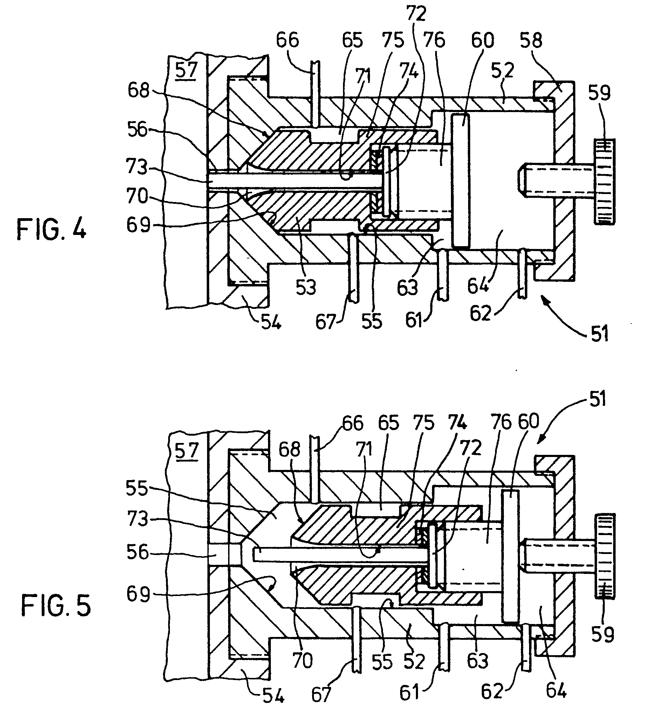

In Fig. 4, 5 besteht die Einspritzdüse 51 im wesentlichen aus einem Gehäuse 52 und einer darin geführten Düsennadel 53. Das Gehäuse 52 ist in das Mischkammergehäuse 54 (angedeutet) eingeschraubt. Es enthält eine Führungsbohrung 55 für die Düsennadel 53. Ein Düsenloch 56 weist in die Mischkammer 57. Rückseitig ist die Führungsbohrung 55 mittels einer Überwurfmutter 58 verschlossen. Eine Stellschraube 59 dient der Einstellung der Hubweite der Düsennadel 53. An ihrem hinteren Ende trägt die Düsennadel 53 einen doppelseitig beaufschlagbaren Hydraulikkolben 60, dem die mit Anschlüssen 61, 62 versehenen Hydraulikkammern 63 bzw. 64 zugeordnet sind. Die Düsennadel 53 ist mit einer konzentrischen Ringnut 65 versehen, welche während der Schließstellung der Düsennadel 53 die Zuleitung 66 mit der Rücklaufleitung 67 (Fig. 4) verbindet. Die vordere Stirnfläche der Düsennadel 53 ist als Dichtfläche 68 ausgebildet, die mit der im Gehäuse 52 angeordneten Dichtfläche 69 kooperiert. Die Dichtflächen 68, 69 sind gehärtet. Am vorderen Ende ist die Düsennadel 53 mit einer zentrischen Ausnehmung 70 ausgestattet. Zur Dichtfläche 68 hin erweitert sich die Ausnehmung 70 trompetenartig ; in die andere Richtung geht sie in eine die Düsennadel 53 durchziehende Bohrung 71 über, die als Lagerung für den rückseitig einen den Kopf 72 aufweisenden Nadelzapfen 73 dient. Der Nadelzapfen 73 hat einen Durchmesser von 1,3 mm und besteht aus einem Schnellarbeitsstaht mit der deutschen Kurzbezeichnung S 6-5-2 (DMo 5) bzw. der Bezeichnung M2 nach US-Standard AlSE. Dieser Werkstoff ist in dem bereits zitierten Stahlschlüssel auf S. 159 unter der Stoffnummer 13343 und auf Seite 223 unter der Nr. 46 aufgeführt. Seine Eigenschaften entsprechen im wesentlichen denen des im Ausführungsbeispiel gemäß Fig. 2,3 aufgeführten Werkzeugstahls. Auch hier kommt der Ausnehmung 70 die Bedeutung zu, dem herausstehenden Ende des Nadelzapfens 73 eine größere freie Länge zu gewähren. Die absatzlose Erweiterung der Ausnehmung 70 hat den Vorteil, daß bei Querbelastung der Nadelzapfen 73 am Austritt aus der Bohrung 71 keine Kerbbeanspruchung erfährt. Mittels einer oder mehrerer Distanzscheiben 74 läßt sich die Länge des über die Dichtfläche 68 der Düsennadel 53 herausragenden Endes des Nadelzapfens 73 exakt einstellen. Um die Distanzscheiben 74 austauschen und die Nadelzapfen 73 fixieren zu können, ist der Hydraulikkolben 60 als in den eigentlichen Nadelkörper 75 eingeschraubtes Schraubstück 76 ausgebildet.

**Ansprüche**

1. Vorrichtung zum Herstellen eines reaktionsfähigen, Massivstoff oder Schaumstoff bildenden Reaktionsgemisches aus zwei fließfähigen Reaktionskomponenten, bestehend aus :
   a) Vorratsbehältern (1, 2), von denen über
   b) Dosierpumpen (5, 6) zu einem
   c) Mischkopf (11) führende
   d) Zuleitungen (3, 4 ; 36 ; 66) in
   e) Einspritzdüsen (7, 8 ; 21 ; 51) enden, von denen
   f) Rücklaufleitungen (12, 13 ; 37 ; 67) abführen, wobei die Einspritzdüsen (7, 8 ; 21 ; 51) in die mit einer Auslaßöffnung (9) versehene
   g) Mischkammer (10 ; 27 ; 57) des Mischkopfes (11) weisen, und wobei
   h) die Einspritzdüsen (7, 8 ; 21 ; 51) jeweils aufweisen :
   h) a) ein Gehäuse (22 ; 52),
   h) b) eine im Gehäuse (22 ; 52) angeordnete, mit der Zuleitung (3, 4 ; 36, 66) und Rücklaufleitung (12, 13 ; 37 ; 67) verbundene Bohrung (25 ; 55)
   h) c) eine in der Bohrung (25 ; 55) geführte Düsennadel (23 ; 53), welche mit
   h) c) a) einer Ausnehmung (35 ; 65) zum Verbinden von Zuleitung (3, 4 ; 36 ; 66) und Rücklaufleitung (12, 13 ; 37 ; 67) während der Rücklaufphase,
   h) c) b) einer Dichtfläche (38 ; 68) und mit
   h) c) c) einem Nadelzapfen (43 ; 73) versehen ist,
   h) d) einem im Gehäuse (22 ; 52) angeordneten, mit der Dichtfläche (38 ; 68) der Düsennadel (23 ; 53) korrespondierenden Dichtsitz (39 ; 69), der

h) d) a) mittig mit einem zylindrischen Düsenloch (26 ; 56) versehen ist, wobei der

h) e) Nadelzapfen (43 ; 73) in das Düsenloch (26 ; 56) einführbar ist,
dadurch gekennzeichnet, daß

i) Düsennadel (23 ; 53) und Nadelzapfen (43 ; 73) aus zwei einzelnen Teilen bestehen, wobei der Nadelzapfen (43 ; 73)

i) a) in der Düsennadel (23 ; 53) austauschbar gelagert ist,

i) b) aus einem zähen, hochelastischen Stahl besteht, und

i) c) im vorderen Bereich der Düsennadel (23 ; 53) von einer in der Düsennadel (23, 53) angeordneten Ausnehmung (40, 70) umgeben ist.

2. Vorrichtung nach Anspruch 1, dadurch gekennzeichnet, daß die Ausnehmung (40 ; 70) als Ringnut ausgebildet ist.

3. Vorrichtung nach Anspruch 1, dadurch gekennzeichnet, daß sich die Ausnehmung (70) zur Dichtfläche (68) hin erweitert.

4. Vorrichtung nach einem der Ansprüche 1 bis 3, dadurch gekennzeichnet, daß die Länge des aus der Düsennadel (23 ; 53) herausragenden Endes des Nadelzapfens (43 ; 73) einstellbar ist.

5. Vorrichtung nach einem der Ansprüche 1 bis 4, dadurch gekennzeichnet, daß der Nadelzapfen (73) rückseitig einen Kopf (72) aufweist.

6. Vorrichtung nach einem der Ansprüche 1 bis 5, dadurch gekennzeichnet, daß der Nadelzapfen (43) durch Klemmverbindung (42) in der Düsennadel (23) gehalten ist.

7. Vorrichtung nach einem der Ansprüche 2 bis 6, dadurch gekennzeichnet, daß die Ausnehmung (40) eine Füllung (45) aus elastomerem Werkstoff aufweist.

8. Vorrichtung nach Anspruch 7, dadurch gekennzeichnet, daß die Füllung (45) bei geöffnetem Düsenloch (26) über die Dichtfläche (38) der Düsennadel (23) vorsteht.


**Claims**

1. Apparatus for preparing a reactive reaction mixture, forming a solid material or foam, from two fluid reaction components, consisting of :

a) reservoirs (1, 2) from which

b) metering pumps (5, 6) to a

c) mixing head (11) terminate in

d) feed lines (3, 4 ; 36 ; 66) leading via

e) injection nozzles (7, 8 ; 21 ; 51) from which

f) return lines (12, 13 ; 37 ; 67) lead off, the injection nozzles (7, 8 ; 21 ; 51) pointing into the

g) mixing chamber (10 ; 27 ; 57) of the mixing head (11) provided with an outlet opening (9) and

h) the injection nozzles (7, 8 ; 21, 51) each comprising :

h) a) a housing (22 ; 52),

h) b) a bore (25 ; 55) arranged in the housing (22 ; 52) and communicating with the feed line (3, 4 ; 36, 66) and the return line (12, 13 ; 37 ; 67),

h) c) a nozzle needle (23 ; 53) guided in the bore (25 ; 55) and provided with

h) c) a) an opening (35 ; 65) for connecting the feed line (3, 4 ; 36 ; 66) and the return line (12, 13 ; 37 ; 67) during the return phase,

h) c) b) a sealing surface (38 ; 68) and with

h) c) c) a needle pin (43 ; 73),

h) d) a sealing seat (39 ; 69) which is arranged in the housing (22 ; 52), corresponding with the sealing surface (38 ; 68) of the nozzle needle (23 ; 53), and which

h) d) a) is centrally provided with a cylindrical nozzle orifice (26 ; 56), the

h) e) needle pin (43 ; 73) being designed for insertion into the nozzle orifice (26 ; 56), characterized in that

i) the nozzle needle (23 ; 53) and the needle pin (43 ; 73) consist of two separate parts, the needle pin (43 ; 73) being

i) a) replaceably mounted in the nozzle needle (23 ; 53),

i) b) made of a ductile, highly elastic steel and

i) c) surrounded towards the front end of the nozzle needle (23 ; 53) by a recess (40, 70) arranged in the nozzle needle (23, 53).

2. Apparatus as claimed in Claim 1, characterized in that the recess (40 ; 70) is in the form of an annular groove.

3. Apparatus as claimed in Claim 1, characterized in that the recess (70) widens towards the sealing surface (68).

4. Apparatus as claimed in any of Claims 1 to 3, characterized in that the length of the end of the needle pin (43 ; 73) projecting from the nozzle needle (23 ; 53) is adjustable.

5. Apparatus as claimed in any of Claims 1 to 4, characterized in that the needle pin (73) comprises a head (72) on its rear side.

6. Apparatus as claimed in any of Claims 1 to 5, characterized in that the needle pin (43) is held in the nozzle needle (23) by a compression joint (42).

7. Apparatus as claimed in any of Claims 2 to 6, characterized in that the recess (40) has a filling of elastomeric material.

8. Apparatus as claimed in Claim 7, characterized in that, when the nozzle orifice (26) is open, the filling (45) projects beyond the sealing surface (38) of the nozzle needle (23).


**Revendications**

1. Dispositif pour fabriquer un mélange réactionnel formant une substance massive ou un produit moussant à partir de deux composants réactionnels fluides, constitué par :

a) des récipients de réserve (1, 2) à partir desquels, par l'intermédiaire de

b) pompes de dosage (5, 6),

c) des conduites (3, 4 ; 36 ; 66) menant

d) à une tête mélangeuse (11)

e) se terminent par des buses d'injection (7, 8 ; 21 ; 51), d'où

f) des conduites de retour (12, 13 ; 37 ; 67) partent, les buses d'injection (7, 8 ; 21 ; 51) regardant vers

g) la chambre de mélange (10 ; 27 ; 57), munie d'un orifice de sortie (9), de la tête de mélange (11), et

h) les buses d'injection (7, 8 ; 21 ; 51) comprenant respectivement :

h) a) un boîtier (22 ; 52),

h) b) un alésage (25 ; 55) se trouvant dans le boîtier (22 ; 52) et relié avec la conduite d'amenée (3, 4 ; 36, 66) et la conduite de retour (12, 13 ; 37 ; 67),

h) c) un pointeau de buse (23 ; 53) guidé dans l'alésage (25 ; 55) et qui est muni

h) c) a) d'un évidement (35 ; 65) pour relier la conduite d'amenée (3, 4 ; 36 ; 66) et la conduite de retour (12, 13 ; 37 ; 67) pendant la phase de retour,

h) c) b) d'une face d'étanchéité (38 ; 68) et

h) c) c) d'un pivot de pointeau (43 ; 73),

h) d) un siège d'étanchéité (39 ; 69) disposé dans le boîtier (22 ; 52), correspondant à la face d'étanchéité (38 ; 68) du pointeau de buse (23 ; 53), et qui est muni,

h) d) a) au centre d'un trou cylindrique de buse (26 ; 56),

h) e) le pivot de pointeau (43 ; 73) pouvant être introduit dans le trou de buse (26 ; 56), dispositif caractérisé en ce que

i) le pointeau de buse (23 ; 53) et le pivot de pointeau (43 ; 73) sont constitués par deux pièces différentes, le pivot de pointeau (43 ; 73)

i) a) étant monté de façon à pouvoir être échangé dans le pointeau de buse (23 ; 53),

i) b) étant constitué d'acier tenace à haute élasticité, et

i) c) étant entouré dans la zone antérieure du pointeau de buse (23 ; 53) par un évidement (40, 70) formé dans le pointeau de buse (23 ; 53).

2. Dispositif selon la revendication 1, caractérisé en ce que l'évidement (40 ; 70) est conformé comme une gorge annulaire.

3. Dispositif selon la revendication 1, caractérisé en ce que l'évidement (70) s'élargit vers la face d'étanchéité (68).

4. Dispositif selon l'une des revendications 1 à 3, caractérisé en ce que la longueur de l'extrémité du pivot de pointeau (43 ; 73) dépassant du pointeau de buse (23 ; 53) est réglable.

5. Dispositif selon l'une des revendications 1 à 4, caractérisé en ce que le pivot de pointeau (73) présente une tête (72) du côté arrière.

6. Dispositif selon l'une des revendications 1 à 5, caractérisé en ce que le pivot de pointeau (43) est maintenu dans le pointeau de buse (23) par une liaison de serrage (42).

7. Dispositif selon l'une des revendications 2 à 6, caractérisé en ce que l'évidement (40) présente un remplissage (45) de matière première élastomère.

8. Dispositif selon la revendication 7, caractérisé en ce que le remplissage (45), lorsque le trou de buse (26) est ouvert, dépasse au-dessus de la face d'étanchéité (38) du pointeau de buse (23).

FIG.1

FIG. 2

FIG. 3

FIG. 4

FIG. 5